# EUROPÄISCHE PATENTANMELDUNG

(11) **EP 2 963 337 A1**
(43) Veröffentlichungstag der Anmeldung: **06.01.2016**
(21) Anmeldenummer: 15173512.3
(22) Anmeldetag: 24.06.2015
(51) Int. Cl.: F21S 8/12

(54) **LICHTMODUL FÜR KRAFTFAHRZEUGSCHEINWERFER**

(30) Priorität: 26.06.2014 DE 102014212370
(71) Anmelder: Automotive Lighting Reutlingen GmbH, 72762 Reutlingen (DE)
(72) Erfinder: Knittel, Joachim, 72762 Reutlingen (DE); Licht, Martin, 72762 Reutlingen (DE); Buchberger, Christian, 72770 Reutlingen (DE)
(74) Vertreter: DREISS Patentanwälte PartG mbB

(57) **Zusammenfassung**

Vorgestellt wird ein Lichtmodul für Kraftfahrzeugscheinwerfer mit einer Laserlichtquelle (1), die einen primären Laserstrahl erzeugt, einem Photolumineszenzkonverter (4), der im primären Laserstrahl angeordnet ist und der mit dem Laserlicht zur Photolumineszenz angeregt wird und eine unter Ausnutzung der Photolumineszenz erzeugte Sekundärlichtverteilung (10) über eine Abstrahlfläche des Konverters ausstrahlt, einer in der Sekundärlichtverteilung angeordneten Detektionseinrichtung, welche dazu eingerichtet und derart angeordnet ist, einen Anstieg der Strahlungsintensität, die auf den Detektor (8) fällt, zu detektieren und mit einem Sicherheitsgrenzwert zu vergleichen und die dazu eingerichtet ist, die Erzeugung des Laserstrahls zu stoppen. Das Lichtmodul zeichnet sich dadurch aus, dass die Detektionseinrichtung eine abbildende Optik (7b) aufweist, die dazu eingerichtet ist, eine Verteilung der Strahlungsintensität über der Abstrahlfläche des Konverters aufzunehmen und eine in einem Teilbereich der Abstrahlfläche auftretende Änderung der Strahlungsintensität zu ermitteln und den Vergleich mit einem Sicherheitsgrenzwert für wenigstens einen der Teilbereiche einzeln durchzuführen.

## Beschreibung

Die vorliegende Erfindung betrifft ein Lichtmodul nach dem Oberbegriff des Anspruchs 1. Ein solches Lichtmodul ist aus der DE 10 2012 220 481 A1 bekannt und umfasst wenigstens eine Laserlichtquelle, die einen primären Laserstrahl erzeugt, einen Photolumineszenzkonverter, der im primären Laserstrahl angeordnet ist und der als Folge der Beleuchtung mit dem Laserlicht zur Photolumineszenz angeregt wird und eine unter Ausnutzung der Photolumineszenz erzeugte Sekundärlichtverteilung über eine Abstrahlfläche des Konverters ausstrahlt, eine in der Sekundärlichtverteilung angeordneten Detektionseinrichtung, welche dazu eingerichtet und derart angeordnet ist, einen Anstieg der Strahlungsintensität, die auf den Detektor fällt, zu detektieren und mit einem Sicherheitsgrenzwert zu vergleichen und die dazu eingerichtet ist, die Erzeugung des Laserstrahls zu stoppen.

Die mit einem Laser angeregte Lichterzeugung mit fluoreszierenden Leuchtmitteln, ermöglicht die Realisierung von kompakten weißen Lichtquellen mit hoher Leuchtdichte (Luminance). Diese Technik der Weißlichterzeugung ist unter der Abkürzung LARP (Laser Activated Remote Phosphor) bekannt und findet Anwendung in der Endoskopie, in Projektionsgeräten und in Scheinwerfern.

In der Regel wird das Laserlicht mittels eines Strahlformungsmittels auf einen Konverter (manchmal auch als Leuchtmittel oder Photolumineszenzelement bezeichnet) gerichtet. Dabei wird das kohärente und potentiell gefährliche Laserlicht in teilweise diffuses und weitgehend inkohärentes, ungefährliches und weißes Licht umgewandelt.

Mit dieser Technik können Scheinwerfer mit extrem hoher Beleuchtungsstärke gebaut werden, die schon erste Anwendungen im Automobilbereich gefunden haben. Ein weiterer Vorteil der Technik ist, dass die hohe Leuchtdichte eine Reduzierung der geometrischen Abmessungen erlaubt.

Ein großer Nachteil der Laserscheinwerfer ist die potentielle Gefahr, dass im Fall eines Defekts oder Verkehrsunfalls das Licht der eingesetzten Laser aus dem Laserscheinwerfer austreten könnte und so gegebenenfalls zu Augenschäden und Verkehrsunfällen durch Blendung führen könnte. Aus diesem Grund muss der Scheinwerfer so ausgelegt sein, dass selbst wenn der Konverter entfernt oder beschädigt wird, z.B. durch Risse aufgrund von Alterungsprozessen, Erschütterungen oder Temperaturschwankungen, kein Laserlicht aus dem Scheinwerfer austritt.

Die eingangs genannte DE 10 2012 220 481 A1 betrifft die Erhöhung der Betriebssicherheit eines Kfz-Scheinwerfers mit Laserlichtquelle. Insbesondere soll zuverlässig erkannt werden, ob gefährliches Laserlicht aus dem Scheinwerfer austritt. Detektoren im Scheinwerfer messen die Intensität des Primärlichts, also von Laserlicht, das vom Konverter weder gestreut noch konvertiert wurde, und des Sekundärlichts, also des konvertierten oder gestreuten Laserlichts, das zusammen mit dem nicht konvertierten Anteil zusammen Licht einer weißen Farbe ergibt. Durch Analyse der Detektorsignale soll eine Beschädigung bzw. ein Fehlen des Leuchtmittels detektiert werden und der Laserbetrieb gegebenenfalls unterbrochen werden. Die Analyse basiert auf der Annahme, dass die Primärlichtintensität im Vergleich zum Sekundärlicht signifikant zunimmt wenn das Leuchtmittel beschädigt ist.

Nachteilig an dieser Methode ist, das eine geringfügige Beschädigung, z.B. ein kleines Loch im Konverter, nicht zuverlässig erkannt werden kann, da in diesem Fall die relative Änderung der verwendeten Signale gering ist. Ein Grund ist, dass bei der Primärlichtdetektion immer auch ein Anteil Sekundärlicht mitgemessen wird. Da die Primärlichtintensität im Bereich von einigen Watt liegt, ist ein Primärlichtanteil von 1% wegen seiner potenziell blendenden Wirkung und seiner die Augensicherheit eventuell beeinträchtigenden Wirkung unerwünscht und soll vermieden werden.

Außerdem funktioniert die bekannte Methode nur dann gut, wenn der Laserstrahl eine gewisse, wenn auch geringe Divergenz hat (d.h. nicht nur auf den Konverter fokussiert ist), so dass im Falle eines defekten Konverters ein signifikanter Anteil des Primärlichts auf den Detektor fallen kann und so eine Signaländerung verursacht, die stärker als das Rauschen des Detektors ist.

Die Aufgabe der vorliegenden Erfindung besteht in der Bereitstellung eines Sicherheitskonzeptes für einen Laserscheinwerfer, das auch eine geringfügige Beschädigung des Konverters zuverlässig detektieren kann und bei Gefahr den Laser deaktiviert. Das Konzept soll über eine hohe Betriebssicherheit verfügen gleichzeitig aber nur geringe Kosten verursachen und die Effizienz nicht oder nur wenig beeinträchtigen.

Diese Aufgabe wird mit den Merkmalen des Anspruchs 1 gelöst. Dabei unterscheidet sich die Erfindung von dem eingangs genannten Stand der Technik dadurch, dass die Detektionseinrichtung eine abbildende Optik aufweist, die dazu eingerichtet ist, eine Verteilung der Strahlungsintensität über der Abstrahlfläche des Konverters aufzunehmen und eine in einem Teilbereich der Abstrahlfläche auftretende Änderung der Strahlungsintensität zu ermitteln und den Vergleich mit einem Sicherheitsgrenzwert für wenigstens einen der Teilbereiche einzeln durchzuführen.

Die Detektionseinrichtung weist bevorzugt eine Kamera oder eine flächenhafte Anordnung von Detektoren auf, die über eine abbildende Optik ein Bild der Oberfläche des Konverters aufnimmt. Durch Analyse des Kamerabildes bzw. der Pixelintensitäten können auch kleine Beschädigungen des Konverters detektiert werden. Beispielsweise könnte die Intensitätsänderung eines einzelnen Pixels von 20% als Zeichen für das Auftreten einer lokalen Beschädigung des Konverters benutzt werden. Jeder Pixel stellt dabei einen Detektor dar, wobei die flächenhafte Anordnung der Pixel / Detektoren dazu dient, die Verteilung der Strahlungsintensität über der Abstrahlfläche des Konverters aufzunehmen und abzubilden.

Bildet sich beispielsweise ein kleiner Riss oder ein kleines Loch im Konverter, welches die Transmission des Primärlichts (Laserlichts) lokal erhöht, so betrifft die durch den Riss oder das Loch erzeugte Änderung des Lichtsignals im Allgemeinen nur einige wenige Pixel (oder Detektoren). Die relative Signaländerung der betroffenen Pixel ist folglich höher als bei einem einzelnen großflächigen Detektor, wie er bei dem eingangs genannten Stand der Technik verwendet wird. Fällt das gesamte zusätzliche Licht auf einen einzelnen Pixel (Detektor) wird die Empfindlichkeit (Signal zu Rausch Verhältnis) im Vergleich zu einem System mit einem einzelnen Detektor um die Anzahl der Pixel verbessert. Damit wird es möglich, auch kleine Defekte zu detektieren, die, wie schon erwähnt, wegen der hohen Intensität der Primärstrahlung unerwünschte Wirkungen hervorrufen können.

Die Analyse des Kamerasignals kann durch Vergleich mit einer vorgegebenen Lichtverteilung erfolgen. Zur Erhöhung der Empfindlichkeit kann die Kamera mit einem Spektralfilter versehen werden der nur das Licht der Laserquelle transmittiert.

Des Weiteren kann zur Erhöhung der Empfindlichkeit das Kamerasignal auf die Intensität der Primärlichtquelle (Laser) normiert werden. Dadurch können Intensitätsschwankungen des Lasers, welche die Messung beeinträchtigen könnten, eliminiert werden.

Da die Verbesserung des Signal zu Rausch Verhältnisses (in gewissem Rahmen) proportional zur Anzahl der Pixel ist, wird schon mit einer Kamera, die nur 10 x 10 = 100 Pixel aufweist, eine signifikante Verbesserung erzielt. Kameras mit etwa 20 x 20 Pixeln werden in optischen Computermäusen eingesetzt und sind äußerst kostengünstig. Ein Vorteil dieser Anzahlen von Pixeln gegenüber einer größeren Anzahl von Pixeln besteht darin, dass eine geringe Anzahl von Pixeln auch eine schnelle Analyse der Daten erlaubt. Es ist günstig, dass der Laserstrahl auf dem Phosphor nicht punktförmig fokussiert ist, sondern dass er einen im Vergleich zu einem Punkt ausgedehnten Fleck auf dem Konverter beleuchtet.

Eine bevorzugte Ausgestaltung sieht vor, dass die Detektionseinrichtung eine Kamera oder eine flächenhafte Anordnung von Detektoren aufweist, die über eine abbildende Optik ein Bild der Oberfläche des Konverters aufnimmt.

Bevorzugt ist auch, dass die Detektionseinrichtung dazu eingerichtet ist, eine Intensitätsänderung eines einzelnen Pixels, die einen Schwellenwert, insbesondere ein Ausmaß von 20 %, übersteigt, als Zeichen für das Auftreten einer lokalen Beschädigung des Konverters zu werten.

Ferner ist bevorzugt, dass eine Analyse des Kamerasignals durch Vergleich mit einem vorgegebenen Intensitätsmuster erfolgt.

Bevorzugt ist auch, dass im Strahlengang vor der Kamera ein Spektralfilter angeordnet ist, der nur das Licht der Laserquelle transmittiert. Bei einer dazu alternativen Ausgestaltung wird an Stelle des Spektralfilters ein Graufilter verwendet, also ein Filter, welches die abzubildenden Intensitäten deutlich, aber gleichmäßig abschwächt.

Bevorzugt ist auch, dass die Detektionseinrichtung dazu eingerichtet ist, das Kamerasignal auf die Intensität der Laserquelle zu normieren.

Bevorzugt ist auch, dass die Anzahl der Detektoren zwischen 10 x 10 und 20 x 20 liegt.

Bevorzugt ist auch, dass ein Konverter von mindestens einer Laserquelle über eine Strahlformungsoptik mit einem Primärlichtstrahl angeregt wird, dass das im Konverter erzeugte Sekundärlicht in etwa den gesamten Halbraum, der von einem Reflektor begrenzt wird, abgestrahlt wird, wobei der Reflektor das Sekundärlicht in Richtung der Hauptstrahlrichtung konzentriert.

Bevorzugt ist auch, dass der Scheinwerfer eine Projektionslinse, insbesondere eine Freiformlinse und eventuell noch mindestens eine Blende enthält, die zur Erzeugung einer scharfen Hell-Dunkel Grenze dient.

Bevorzugt ist auch, dass das Lichtmodul dazu eingerichtet ist, einen Teil der Laserstrahlung an der Oberfläche des Konverters zu reflektieren, wobei eine den reflektierten Teil absorbierende oder Strahlfalle oder ein den reflektierten Teil zum Konverter zurück reflektierenden Spiegel aufweist.

Bevorzugt ist auch, dass das Lichtmodul dazu eingerichtet ist, dass die Abbildung der Oberfläche des Konverters auf die Kamera oder auf die flächenhafte Anordnung von direkt nebeneinander liegenden Detektoren mittels einer Linse oder eines Reflektor erfolgt, wobei die Abbildung durch eine kleine Öffnung im Reflektor erfolgt, die bevorzugt so gestaltet ist, das möglichst wenig Licht verloren geht, aber gleichzeitig noch genügend Licht auf die Kamera fällt.

Bevorzugt ist auch, dass die Abbildungseigenschaften der Linse so ausgelegt sind, dass die gesamte vom Laser beleuchtete Fläche des Konverters auf die Kamera oder die flächenhafte Anordnung von direkt nebeneinander liegenden Detektoren abgebildet wird.

Bevorzugt ist auch, dass die Öffnung auf der Reflektorfläche so positioniert ist, dass der Lichtstrahl bei Entfernung des Konverters wenigstens zum Teil in die Öffnung fällt, so dass unter keinen Umständen das gesamte Primärlicht in der Hauptabstrahlrichtung abgestrahlt wird.

Bevorzugt ist auch, dass die Kamera oder die flächenhafte Anordnung der Detektoren die vom Laser beleuchtete Seite des Konverters abbildet. Eine erfindungsgemäße Analyse der Konverterfläche ist nicht nur im Betrieb des Lasers denkbar, sondern auch bei ausgeschaltetem Laser. Es ist bevorzugt, bei jedem Einschalten des Lasers eine Überprüfung der Konverterfläche durchzuführen.

Bevorzugt ist auch, dass die Kamera oder die flächenhafte Anordnung der Detektoren mit einem Spektralfilter versehen ist, der nur das Laserlicht transmittiert und das Fluoreszenzlicht blockiert.

Bevorzugt ist auch, dass die Kamera oder die flächenhafte Anordnung der Detektoren mit einem optionalen Spektralfilter versehen ist, der nur das Fluoreszenzlicht transmittiert und das Laserlicht blockiert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Figur 1: ein erstes Ausführungsbeispiel eines erfindungsgemäßen Lichtmoduls;
- Figur 2: ein um ein passive Sicherheitskonzept erweitertes Ausführungsbeispiel; und
- Figur 3: ein weiteres Ausführungsbeispiel eines erfindungsgemäßen Lichtmoduls.

Im Folgenden wird der optische Aufbau eines erfindungsgemäßen Lichtmoduls für Kraftfahrzeuge beschrieben.

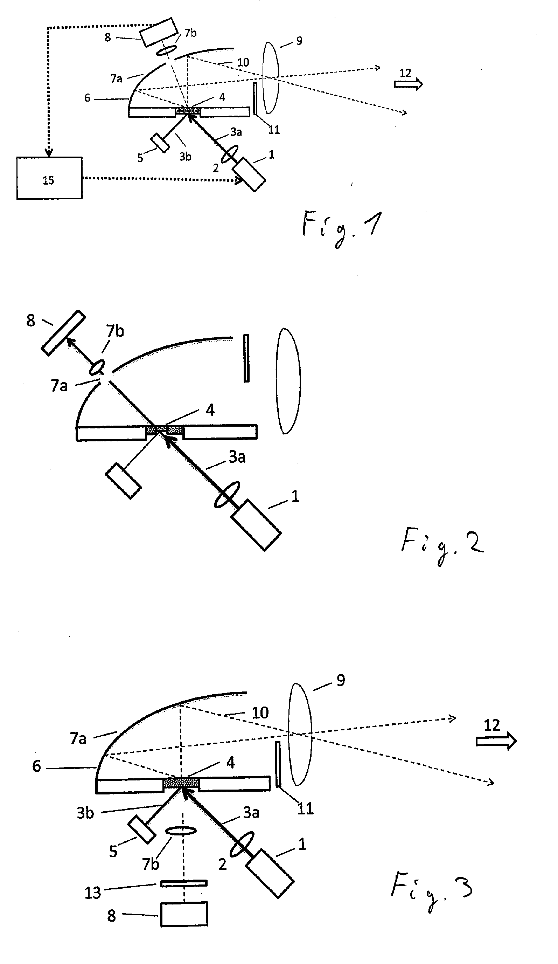

Im Einzelnen zeigt die Figur 1 ein Lichtmodul, bei dem ein Konverter 4 von mindestens einer Laserquelle 1 über eine Strahlformungsoptik 2 mit einem Primärlichtstrahl 3a angeregt wird.

Typischerweise handelt es sich bei der Laserquelle um einen Halbleiterlaser mit einer Wellenlänge von 440 bis 470 nm, der einen Konverter (z.B. ein Phosphor / Phosphor-Gemisch mit Streuteilchen) anregt, der gelbes Fluoreszenzlicht mit einem Spektrum zwischen 490 bis 700 nm emittiert. Durch die Vermischung von im Konverter gestreuten blauem Primärlicht und gelbem Fluoreszenzlicht entsteht weißes Sekundärlicht.

Das im Konverter erzeugte Sekundärlicht 10 wird in den gesamten oberen Halbraum, der vom Reflektor 6 begrenzt wird, abgestrahlt. Der Reflektor konzentriert das Sekundärlicht in Richtung der Hauptstrahlrichtung 12. Optional kann der Scheinwerfer eine Projektionslinse, insbesondere eine Freiformlinse und eventuell noch mindestens eine Blende 11 enthalten. Die Blende dient zur Erzeugung einer scharfen Hell-Dunkel Grenze wie sie z.B. zum Erzeugen einer typischen Abblendlichtverteilung notwendig ist.

Ein Teil 3 b der Laserstrahlung 3a wird an der Oberfläche des Konverters reflektiert. Der reflektierte Strahl 3b fällt auf eine Strahlfalle 5, die den Laserstrahl absorbiert. Zur Verbesserung der Effizienz kann die Strahlfalle 5 auch durch einen (evtl. gekrümmten) Spiegel ersetzt werden, der den Strahl wieder auf den Konverter zurück wirft.

Mindestens eine Linse 7b oder ein Reflektor bildet die Oberfläche des Konverters 4 auf eine Kamera 8 oder eine flächenhafte Anordnung von direkt nebeneinander liegenden Detektoren ab. Die Abbildung erfolgt durch eine kleine Öffnung 7a im Reflektor. Diese ist bevorzugt so gestaltet, das möglichst wenig Licht verloren geht, aber gleichzeitig noch genügend Licht auf die Kamera fällt. Die Abbildungseigenschaften der Linse sind bevorzugt so ausgelegt, dass die gesamte vom Laser beleuchtete Fläche des Konverters auf die Kamera abgebildet wird.

Zur Auswertung der Kamerasignale oder Detektorsignale ist eine Steuereinheit 15 vorgesehen, die bei Detektion einer möglichen Beschädigung des Konverters den Laser 1 abschaltet.

Die Öffnung 7a ist auf der Reflektorfläche bevorzugt so positioniert, dass der Lichtstrahl 3a bei Entfernung des Konverters 4 wenigstens zum Teil in die Öffnung 7a fällt, so dass unter keinen Umständen das gesamte Primärlicht in der Hauptabstrahlrichtung 14 abgestrahlt wird. Diese Anordnung fügt dem aktiven Sicherheitskonzept der Erfindung noch ein passives Element hinzu. Dies ist in Fig. 2 dargestellt, wo der Laserstrahl 3a durch einen teilweise beschädigten Konverter 4 transmittiert wird und in die Öffnung 7a im Reflektor fällt.

Denkbar ist auch eine Ausgestaltung bei der die Kamera 8 die von Laser 1 beleuchtete Seite des Konverters abbildet. Zur Erhöhung der Empfindlichkeit ist die Kamera mit einem optionalen Spektralfilter 13 versehen, der nur das Laserlicht transmittiert und das Fluoreszenzlicht blockiert. Die Anordnung ist in Fig. 3 gezeigt. Auch hier gilt, dass in einer weiteren Ausgestaltung an Stelle des Spektralfilters ein Graufilter verwendet wird, also ein Filter, welches die abzubildenden Intensitäten deutlich, aber gleichmäßig abschwächt.

Es sind auch Ausgestaltungen denkbar bei denen der Reflektor 6 durch eine Linse (Freiformlinse) ersetzt wird.

Es sind Ausgestaltungen denkbar bei denen die Kamera mit einem optionalen Spektralfilter 13 versehen ist, der nur das Fluoreszenzlicht transmittiert und das Laserlicht blockiert. In einer weiteren Ausgestaltung wird an Stelle des Spektralfilters ein Graufilter verwendet.

Die Kamera kann noch für weitere Anwendungen eingesetzt werden: bei der Produktion als Justagehilfe bzw. als Sensor für den Montageroboter beim Einbau der Laserquelle, für Qualitätskontrolle und bei der späteren Wartung des Scheinwerfers im Auto (Kriterien: Liegt die vom Laser beleuchtete Region im richtigen Bereich? Hat die Region die richtigen Abmessungen, die richtige Lichtstärke etc. ?)

## Patentansprüche

1. Lichtmodul für Kraftfahrzeugscheinwerfer mit wenigstens einer Laserlichtquelle, die einen primären Laserstrahl erzeugt, einem Photolumineszenzkonverter, der im primären Laserstrahl angeordnet ist und der als Folge der Beleuchtung mit dem Laserlicht zur Photolumineszenz angeregt wird und eine unter Ausnutzung der Photolumineszenz erzeugte Sekundärlichtverteilung über eine Abstrahlfläche des Konverters ausstrahlt, einer in der Sekundärlichtverteilung angeordneten Detektionseinrichtung, welche dazu eingerichtet und derart angeordnet ist, einen Anstieg der Strahlungsintensität, die auf den Detektor fällt, zu detektieren und mit einem Sicherheitsgrenzwert zu vergleichen und die dazu eingerichtet ist, die Erzeugung des Laserstrahls zu stoppen, **dadurch gekennzeichnet, dass** die Detektionseinrichtung eine abbildende Optik aufweist, die dazu eingerichtet ist, eine Verteilung der Strahlungsintensität über der Abstrahlfläche des Konverters aufzunehmen und eine in einem Teilbereich der Abstrahlfläche auftretende Änderung der Strahlungsintensität zu ermitteln und den Vergleich mit einem Sicherheitsgrenzwert für wenigstens einen der Teilbereiche einzeln durchzuführen.

2. Lichtmodul nach Anspruch 1, **dadurch gekennzeichnet, dass** die Detektionseinrichtung eine Kamera oder eine flächenhafte Anordnung von Detektoren aufweist, die über eine abbildende Optik ein Bild der Oberfläche des Konverters aufnimmt

3. Lichtmodul nach einem der vorhergehenden Ansprüche, **dadurch gekennzeichnet, dass** die Detektionseinrichtung dazu eingerichtet ist, eine Intensitätsänderung eines einzelnen Pixels, die einen Schwellenwert, insbesondere ein Ausmaß von 20 %, übersteigt, als Zeichen für das Auftreten einer lokalen Beschädigung des Konverters zu werten.

4. Lichtmodul nach einem der vorhergehenden Ansprüche, **dadurch gekennzeichnet, dass** eine Analyse des Kamerasignals durch Vergleich mit einer vorgegebenen Lichtverteilung erfolgt.

5. Lichtmodul nach einem der vorhergehenden Ansprüche, **dadurch gekennzeichnet, dass** im Strahlengang vor der Kamera ein Spektralfilter angeordnet ist, der nur das Licht der Laserquelle transmittiert.

6. Lichtmodul nach einem der vorhergehenden Ansprüche, **dadurch gekennzeichnet, dass** die Detektionseinrichtung dazu eingerichtet ist, das Kamerasignal auf die Intensität der Laserquelle zu normieren.

7. Lichtmodul nach einem der vorhergehenden Ansprüche, **dadurch gekennzeichnet, dass** die Anzahl der Detektoren zwischen 10 x 10 und 20 x 20 liegt.

8. Lichtmodul nach einem der vorhergehenden Ansprüche, **dadurch gekennzeichnet, dass** der Scheinwerfer eine Projektionslinse, insbesondere eine Freiformlinse und eventuell noch mindestens eine Blende (11) enthält, die zur Erzeugung einer scharfen Hell-Dunkel Grenze dient.

9. Lichtmodul nach einem der vorhergehenden Ansprüche, **dadurch gekennzeichnet, dass** das Lichtmodul dazu eingerichtet ist, einen Teil (3 b) der Laserstrahlung (3a) an der Oberfläche des Konverters zu reflektieren, wobei eine den reflektierten Teil absorbierende oder Strahlfalle (5) oder ein den reflektierten Teil zum Konverter zurück reflektierenden Spiegel aufweist.

10. Lichtmodul nach einem der vorhergehenden Ansprüche, **dadurch gekennzeichnet, dass** es dazu eingerichtet ist, dass die Abbildung der Oberfläche des Konverters auf die Kamera (8) oder auf die flächenhafte Anordnung von direkt nebeneinander liegenden Detektoren mittels einer Linse (7b) oder eines Reflektor erfolgt, wobei die Abbildung durch eine kleine Öffnung (7a) im Reflektor erfolgt, die bevorzugt so gestaltet ist, das möglichst wenig Licht verloren geht, aber gleichzeitig noch genügend Licht auf die Kamera fällt.

11. Lichtmodul nach einem der vorhergehenden Ansprüche, **dadurch gekennzeichnet, dass** die Abbildungseigenschaften der Linse so ausgelegt sind, dass die gesamte vom Laser beleuchtete Fläche des Konverters auf die Kamera oder die flächenhafte Anordnung von direkt nebeneinander liegenden Detektoren abgebildet wird.

12. Lichtmodul nach einem der vorhergehenden Ansprüche, **dadurch gekennzeichnet, dass** die Öffnung (7a) auf der Reflektorfläche so positioniert ist, dass der Lichtstrahl (3a) bei Entfernung des Konverters (4) wenigstens zum Teil in die Öffnung (7a) fällt, so dass unter keinen Umständen das gesamte Primärlicht in der Hauptabstrahlrichtung (14) abgestrahlt wird.

13. Lichtmodul nach einem der vorhergehenden Ansprüche, **dadurch gekennzeichnet, dass** die Kamera (8)oder die flächenhafte Anordnung der Detektoren die vom Laser 1 beleuchtete Seite des Konverters abbildet.

14. Lichtmodul nach einem der vorhergehenden Ansprüche, **dadurch gekennzeichnet, dass** die Kamera oder die flächenhafte Anordnung der Detektoren mit einem Spektralfilter (13) versehen ist, der nur das Laserlicht transmittiert und das Fluoreszenzlicht blockiert.

15. Lichtmodul nach einem der vorhergehenden Ansprüche, **dadurch gekennzeichnet, dass** die Kamera oder die flächenhafte Anordnung der Detektoren mit einem optionalen Spektralfilter (13) versehen ist, der nur das Fluoreszenzlicht transmittiert und das Laserlicht blockiert.
